# EUROPEAN PATENT APPLICATION

(11) **EP 4 075 679 A1**
(43) Date of publication of application: **19.10.2022**
(21) Application number: 21168385.9
(22) Date of filing: 14.04.2021
(51) Int. Cl.: H04B 1/7143, H04B 1/7156, G01B 21/04, G01B 5/008

(54) **RADIO COMMUNICATIONS APPARATUS FOR A MEASUREMENT SYSTEM**

(71) Applicant: Renishaw PLC, Wotton-under-Edge, Gloucestershire GL12 8JR (GB)
(72) Inventor: STYLES, John Anthony, Gloucestershire, GL12 8JR (GB); TAYLOR, Paul Anthony, Gloucestershire, GL12 8JR (GB)
(74) Representative: Dunn, Paul Edward

(57) **Abstract**

A frequency hopping radio communications module (18,26) for a measurement system is described. The measurement system may comprise a measurement probe (10) and an interface (20) for a machine tool. The communications module (18,26) is configured to transmit and/or receive radio signals using a plurality of frequency channels and can operate in at least a metrology mode for communicating measurement data and a standby mode. Operation in the standby mode comprises hopping between fewer frequency channels than operation in the metrology mode. This allows faster frequency hopping synchronisation to be achieved and improves battery life.

## Description

The present invention relates to a frequency hopping radio communications module for use in a measurement system. In particular, the invention relates to such a frequency hopping radio communications module for use in a machine tool measurement probe and/or an associated probe interface.

Co-ordinate positioning apparatus (e.g. machine tools) are often equipped with a measurement device, for example a touch trigger probe which measures the position of points on the surface of a workpiece. A touch trigger probe has a stylus which, when deflected by contact with the surface, produces a so-called trigger signal. This trigger signal is used to freeze the outputs of the measurement scales of the machine tool thereby indicating the position of the probe and thus, with appropriate calibration, the position of a point on the surface of the workpiece.

In certain circumstances, for example when it is difficult to wire a probe directly to a machine controller, a wireless transmission system is used to communicate the trigger signal to the machine controller via a probe interface. In particular, it is known to use frequency hopping spread spectrum (FHSS) communications between the probe and probe interface. Such a communications protocol is described in WO2004/057552 and is also used in the "RMP" range of machine tool probes and the associated "RMI" probe interfaces sold by Renishaw plc, Wotton-under-Edge, Gloucestershire, UK. A similar FHSS communications protocol is also used in the Primo range of measurement probes, also sold by Renishaw plc.

It has been found that the above described FHSS systems provide robust communications in often harsh (RF) operating environments. Although FHSS is typically the best option once operating, it does pose challenges to establishing the communication when transitioning from a low power "standby" (battery saving) mode into a metrology "operating" mode. In particular, before synchronisation is established, both the probe and interface have no knowledge of what channel the other is operating on. It is therefore necessary to employ a suitable technique that can ensure that both ends of the link (the probe and the interface) arrive on the same channel at the same time to successfully exchange data.

The Renishaw RMP system operates over 79 individual channels with a frame time of 1ms. To establish communication, the interface will dwell on each channel in the hopping sequence for 79ms, while the probe hops through the entire hopping sequence changing channel and transmitting every 1ms. This should ensure that there is an opportunity for communication at least once every 79ms (providing the particular channel is not already occupied). The Renishaw Primo system operates over 79 individual channels, with a frame time of 1.024ms. In order to establish communication, the probe will adjust its frame time to 1.2ms and will transmit every frame. Eventually, due to the "skew"' timing differences, the probe and interface will arrive on the same channel at the same time and communication can be established. Furthermore, if the aligned channel is blocked, the next hop will still be available to establish communication.

Although the RMP and Primo systems can reliably establish FHSS communications, this can take up to a quarter of a second during which time the probe is transmitting in every frame. The present inventors have been found this to be inefficient in terms of time, undesirable from a battery power consumption perspective and that it adds congestion to the RF environment.

WO2014/091202 describes a variant to the FHSS technique described in WO2004/057552 in which the probe interface comprises a primary modem and a secondary modem. The primary modem is used to communicate with an active measurement probe (i.e. a probe that is being used to acquire measurements) over a first frequency hopping spread spectrum radio link. The secondary modem is used for communicating with further measurement probe devices over different frequency hopping spread spectrum radio links. The communication links provided by the secondary modem are only used to allow frequency hopping synchronisation with the further measurement probe devices to be maintained (i.e. no measurement data is received by the secondary modem). This arrangement removes the need to establish frequency hopping synchronisation each time a different measurement probe device is to be used with the primary modem, because the required synchronisation information is already known to the interface. It is therefore possible to quickly switch the primary modem to communicate with different measurement probe devices. Although the technique WO2014/091202 reduces the need to re-establish frequency hopping synchronisation, it does consume battery power and the periodic transmissions add congestion to the RF environment. Furthermore, if communications are lost with a standby probe (e.g. if that probe is moved out of range of the receiver) full frequency hopping synchronisation would have to be re-established.

According to a first aspect, the present invention comprises a frequency hopping radio communications module for a measurement system, the communications module being configured to transmit and/or receive radio signals using a plurality of frequency channels and to operate in at least a metrology mode for communicating measurement data and a standby mode, wherein operation in the standby mode comprises hopping between fewer frequency channels than operation in the metrology mode.

The present invention thus relates to a frequency hopping spread spectrum (FHSS) radio communications module that can be used in a measurement system to establish a FHSS (wireless) radio communication link between different system components. In a preferred embodiment, communication modules of the present invention may be used for the wireless communication of measurement data from a plurality of battery-operated measurement probes to a measurement interface that is hardwired to a machine tool. The communications module transmits and/or receives a radio signal over multiple frequency channels which are preferably spread over a certain frequency band (e.g. over the 2.4GHz radio band).

The communications module is operable in at least two different modes, namely a metrology (first) mode and a standby (second) mode. The metrology and standby modes both implement frequency hopping communication protocols and thus, in use, hop between different frequency channels according to certain hopping patterns. Data packets may be transmitted and/or received on each such frequency channel.

The metrology mode is configured for the transmission of measurement data. For example, the metrology mode may be configured to allow the wireless transmission of measurement data from a measurement device to a measurement interface. The measurement data may comprise, for example, touch trigger event information, positional measurements, ultrasound measurements, temperature measurements etc depending on the type of measurement sensor provided as part of the measurement device. The metrology mode thus preferably makes use of enough frequency channels to ensure reliable and robust communications, even in the presence of many other radio devices or RF interference. In metrology mode, a similar frequency hopping scheme may thus be implemented to that described in WO2004/057552.

The standby mode is not intended for measurement data transmission, but instead can be used to establish frequency hopping synchronisation between two communication modules. For example, a plurality of measurement devices may include communication modules that are placed in standby mode when they are not currently required for measurement purposes. The communications modules of each such measurement device may then hop between the frequency channels waiting to receive a "turn on" signal from the communications module of an associated measurement interface.

As explained above, the standby mode implements frequency hopping, but it uses fewer frequency channels than the metrology mode. In a specific embodiment described below, the standby mode may frequency hop between 3 channels whilst the metrology mode hops between 39 or 79 channels. The fewer frequency channels that are used in the standby mode means that a communications link can be established much more quickly. For example, if a communications module needs to listen periodically for the duration of one cycle through all frequency channels, this is quicker and uses less power if a smaller number of channels are used. This power saving is especially important for the battery-operated parts of a measurement system. The standby mode may be exited on receipt of a turn on instruction and in a preferred embodiment the turn on instructions also provide the information needed to establish frequency hopping synchronisation in metrology mode.

It should be noted that the communications module of the present invention may be implemented in a variety of ways. For example, the communications module may comprise a suitably configured circuit or processor. The communications module may also comprise a RF antenna or it may be connectable to an associated RF antenna. As explained below, the communications module may be incorporated into a measurement device (e.g. a measurement probe) and/or into an interface for communication with such a measurement device. Other components may be included within the communications module.

In a FHSS system, the so-called hopping pattern defines the frequency channels that are used for communication along with order in which those channels are used (i.e. the order they are hopped between). Advantageously, operation in the metrology mode comprises hopping between frequency channels in accordance with a first hopping pattern. The first hopping pattern may include each of the plurality of frequency channels. In other words, all the usable frequency channels may be included in the first hopping pattern. It would, of course, also be possible to use only a subset of all the usable frequency channels. A different first hopping pattern may be used for different communications modules. In particular the order of channels may be different for different communications modules to prevent communication clashes. The first hopping pattern may be derived from a unique identifier of the communications module or measurement device, such as the probe ID or serial number. In this manner, different first hopping pattern may be used for co-located systems thereby reducing the chance of a conflict with adjacent systems by allowing many different hopping patterns to be created. Operation in the standby mode comprises hopping between frequency channels in accordance with a second hopping pattern. As explained above, the second hopping pattern includes fewer channel than the first hopping pattern. The second hopping pattern may include a subset of the plurality of frequency channels. In other words, only some of the available frequency channels may form the second hopping pattern. All of the frequency channels used in the second hopping pattern may also be used in the first hopping pattern. In other word, there is no need to reserve frequency channels just for standby mode communications. A different second hopping pattern may be used for different communications modules. In particular, the channels that are used and the order of the channels may be different for different communications modules to prevent communication clashes. The same number of channels may be used in each second hopping pattern. The second hopping pattern may be derived from a unique identifier of the communications module or measurement device, such as the probe ID or serial number. For similar reasons as outlined above, this reduces the chance of a conflict with adjacent systems.

Advantageously, the frequency channels of the second hopping pattern are spaced apart over the frequency band of operation. For example, three frequency channels may be selected from different thirds of the frequency band. This helps to ensure that any interference from a particular interference source (e.g. a wi-fi channel) is likely to be avoided by hopping between the different thirds of the frequency band.

As explained above, the metrology mode preferably uses as many channels as possible to provide a resilient and robust wireless communications link. Operation in the metrology mode thus preferably comprises hopping between at least 10, or more preferably at least 20, or more preferably at least 30 different frequency channels. Operation in the standby mode preferably comprises hopping between no more than 10, more preferably no more than 5, or more preferably no more than 3 frequency channels. In a preferred embodiment, 3 frequency channels are used in the standby mode and 39 or 79 frequency channels are used in metrology mode. This provides good communications resilience in metrology mode, and a fast communication acquisition (synchronisation) time in standby mode. It should be noted that different frame rates may be used in the standby and metrology modes. For example, shorter frame rates may be in standby mode whilst the frame rate in metrology mode may have an adjustable length to accommodate communication of different types of data.

The standby mode is preferably used for communication between two communication modules without the transfer of measurement data. Advantageously, information communicated in the standby mode enables a communications link to be established in the metrology mode. For example, a master communications module operating in standby mode may establish a frequency hopping communications link with a slave communications module also operating in standby mode. This communication link may be used to pass synchronisation information between the master and slave modules that enable both modules to enter the metrology mode in synchronisation. For example, the clocks of the master and slave modules may be aligned and a start channel of the first hopping pattern may be designated. Both modules may then start hopping from the next frame in accordance with the first hopping pattern (i.e. operating in metrology mode) and starting with the designated frequency channel.

The present invention also extends to a measurement device that includes the frequency hopping radio communications module described above. The measurement device may also comprise a measurement sensor for generating metrology data. The measurement sensor may be of any type. For example, it may allow the measurement of dimensions, positions, temperature etc. The sensor may be a contact sensor (i.e. it may physically touch an object being measured) or it may be a non-contact sensor (e.g. it may use optical, inductive, capacitive etc sensing). In a preferred embodiment, the measurement sensor is a touch trigger sensor for measuring deflection of a stylus (i.e. the measurement device comprises a touch trigger probe). Metrology data generated by the measurement sensor is preferably transmitted to an associated interface using the frequency hopping radio communications module of the measurement device operating in the metrology mode.

For a given system of communication modules, the same hopping patterns are used to allow the coordinated hopping between frequency channels. As explained above, it is convenient for the communications used by different systems (i.e. different sets of communication modules) to use different hopping patterns to reduce the possibility of interference if such systems are co-located. In a preferred embodiment, the measurement device comprises a unique identifier. For example, each measurement device may be assigned a unique identification code. The first and/or second hopping patterns used in the metrology and standby modes may then be derived from that unique code. It follows that, in such an example, the unique identifier should be known by the measurement device and by the associated interface (e.g. by pre-programming or via a previous pairing process). This may allow both ends of the communications link to derive the same first and/or second hopping patterns for use in the metrology and standby modes respectively. Alternatively, one communication module may transmit a hopping pattern or patterns to the other communication module during an initial pairing or partnering process. For example, the measurement device may receive the hopping patterns to be used in the metrology mode and/or in the standby mode from an associated interface. This transmission of information may be performed during an initial partnering process.

The measurement device may be battery operated. It is therefore advantageous for the measurement device to use as little electrical power as possible to maximise battery life. The communications module of the measurement device may thus be configured to passively receive information (whilst hopping between channels) until an activation message is received from the associated measurement interface. The frame rate used when passively listening for an activation message may be greater than the frame rate of the associated measurement interface. In particular, the duration of each frame used by the measurement device may be set to be at least equal to the time taken for the associated measurement interface to cycle through each of the frequency channels (e.g. one cycle through the second hopping pattern). Once an activation message is received, the measurement device may transmit information (e.g. to acknowledge receipt of the activation message) to the measurement interface.

The communications module of the measurement device may act as transmission master or transmission slave. The metrology and standby modes may use different transmission masters to control the communications link. Preferably, the communications module of the measurement device acts as a transmission slave in standby mode. Consequently, the communications module of the associated measurement interface may act as the transmission master. As noted above, the communications module of the measurement device may passively receive signals as it hops between frequency channels according to a second hopping pattern until an activation message is received from the measurement interface. The communications module of the measurement device may then switch from the standby mode to the metrology mode on receipt of an appropriate activation message from the associated measurement interface. The activation message may include information to allow frequency hopping synchronisation to be established with the associated interface on entering metrology mode. On entering metrology mode, the communications module of the measurement device may act as the transmission master (i.e. with the measurement interface becoming the transmission slave). This is particularly advantageous when the measurement device needs to transmit information from asynchronous measurement events.

It should also be noted that the communications protocol may include appropriate sequences of acknowledgements, with redundancy (e.g. retransmissions etc) to guard against the non-receipt of messages due to interference etc.

In a preferred embodiment, the measurement sensor of the measurement device comprises a touch trigger sensor. The touch trigger sensor may generate a trigger signal on attaining a certain spatial relationship with a point on the surface of an object. For example, a trigger signal may be generated when a stylus is deflected. The measurement probe may be for a machine tool. This trigger signal may be communicated to the associated interface when the communications module is operating in metrology mode. The measurement probe may also include at least one of a stylus, a shank and a battery. The transmission of such a trigger signal (or any measurement data) may not be possible when operating in standby mode. The measurement device may include multiple measurement sensors (e.g. a touch trigger sensor and a temperature sensor).

The present invention also extends to a measurement interface that includes a communications module as described above. The measurement interface may be hardwired (i.e. not battery operated) to an associated machine. For example, the measurement interface may be connected (hardwired) to a machine tool controller. Advantageously, the measurement interface is for communicating with a plurality of associated measurement devices. The measurement interface may have an output or outputs for passing the measurement data received from an associated measurement device to an associated machine (e.g. to a machine tool or industrial PC etc). The measurement interface may include a plurality of different outputs for different types of measurement data. Analogue probe data may be passed to an industrial PC for processing via an Ethernet or Industrial ethernet link. A trigger signal generated by a touch trigger sensor may be passed directly to a machine tool controller from the interface over a real time link. For example, such a touch trigger signal may be output by latching the voltage of a line connected to the SKIP input of the controller or by generating a pulse or series of pulses that are passed to the SKIP input. The trigger signal may alternatively be passed to the controller over a digital data bus (e.g. as described in WO2018/134585).

The communications module of the measurement interface may act as transmission master or transmission slave. The metrology and standby modes may use different transmission masters to control the communications link. Preferably, the communications module of the measurement interface acts as a transmission master in standby mode. Consequently, the communications module of the associated measurement device may act as the transmission slave in standby mode. The measurement interface, when operating in standby mode, may transmit a turn-on instruction or message for a required measurement device. This turn-on or activation instruction may be specific to one measurement device from a plurality of measurement devices that are operating in their standby mode. The measurement interface thus uses the second hopping pattern for the measurement device that is to be turned on. The turn-on message may also include a header that includes information about the measurement device that is to be activated (e.g. it may contain a probe ID). The communications module of the measurement interface may also be arranged to receive an acknowledgement transmission from an activated measurement device. Once the turn-on message has been successfully transmitted, the communications module of the measurement interface may enter the metrology mode. The turn-on message may have included information to allow frequency hopping synchronisation to be established with the associated measurement device on entering metrology mode. On entering metrology mode, the communications module of the measurement interface may act as the transmission slave (i.e. with the measurement device becoming the transmission master).

The measurement interface may comprise a memory that stores the second hopping pattern. The measurement interface and each of the plurality of associated measurement devices may store the same second hopping pattern. Alternatively, each of the plurality of associated measurement devices may store a different second hopping pattern and the measurement interface may store each of the second hopping patterns. In this manner, any selected one of the plurality of associated measurement devices can be activated and enter metrology mode thereby allowing measurement data communication. The memory may also store the first hopping pattern. The measurement interface and each of the plurality of associated measurement devices may store the same first hopping pattern. Alternatively, each of the plurality of associated measurement devices may store a different first hopping pattern and the measurement interface may store each of the first hopping patterns. The stored hopping patterns may be pre-calculated (e.g. during manufacture). The hopping patterns may be loaded into the module, for example after being generated separately from the module. In one embodiment, first and/or second hopping patterns may be stored by a measurement interface and communicated to associated measurement devices during an initial partnering or pairing process. Alternatively, the module comprises a processor for calculating the hopping patterns. The hopping patterns may be calculated once and then stored in memory for future use. Alternatively, a hopping pattern may be calculated each time it is required (e.g. on power-up).

The present invention also extends to a measurement system that comprises one or more measurement devices and a measurement interface. Each component of the measurement system (i.e. each measurement device and the measurement interface) may include a communications module of the present invention. Legacy communication protocols may also be provided in such components. In a preferred embodiment, the measurement system is for use on a machine tool.

The plurality of frequency channels used by the communications module may comprise frequency channels within the 2.4GHz radio frequency band (which extends from 2.4000-2.4835GHz). This is also known as the Industrial, Scientific and Medical (ISM) band and is licence free in most countries. Each frequency channel may be 2MHz wide, although it should be noted that any transmission may only be over a part of the frequency range of each channel. In a preferred embodiment, 39 channels are provided (each 2MHz wide) that extend from 2.404GHz to 2.480GHz. It should be noted that the invention may be used in any radio frequency band and is not limited to ISM band operation. Preferably, the module is configured to operate on a standard, licence free, wireless frequency band. It should be noted that such frequency bands may vary from country to country, or over time, depending on regulatory rules but this does not alter the benefits associated with the present invention.

The communications module may be formed in any appropriate manner. For example, the module may be formed as a circuit board (e.g. an FPGA module) for mounting inside a measurement probe and/or within a measurement probe interface. The circuit board may implement other functions connected to the frequency hopping communications or for other processes. The module may also include any one or more of the features described in WO2004/057552.

Also described herein is a frequency hopping radio communications module for transmitting and/or receiving radio signals using a plurality of frequency channels, the communications module being operable in at least a first mode and a second mode, wherein the second mode comprises hopping between fewer frequency channels than the first mode. The module may be used for measurement or any other purpose.

Also described herein is a method of using a frequency hopping radio communications module for the communication of measurement data. The method comprises the step of transmitting and/or receiving radio signals using a plurality of frequency channels. The method further comprises a step of operating in at least a metrology mode for communicating measurement data and a standby mode. The step of operating in the standby mode may comprise hopping between fewer frequency channels than the step of operating in the metrology mode. The method may include any one or more of the features described above for the analogous apparatus.

Also described herein is a measurement device, comprising a measurement sensor for generating metrology data and a frequency hopping radio communications module configured to transmit and/or receive radio signals using a plurality of frequency channels and to operate in at least a metrology mode for communicating measurement data and a standby mode, wherein operation in the standby mode comprises hopping between fewer frequency channels than operation in the metrology mode. The measurement device may have any one or more of the features described above.

Also described herein is a measurement interface, comprising a communications module configured to transmit and/or receive radio signals using a plurality of frequency channels and to operate in at least a metrology mode for communicating measurement data and a standby mode, wherein operation in the standby mode comprises hopping between fewer frequency channels than operation in the metrology mode, the measurement interface also comprising an output (or outputs) for passing the measurement data received from an associated measurement device to an associated machine. A kit comprises a measurement interface and a measurement probe may also be provided.

The invention will now be described, by way of example only, with reference to the accompanying drawings in which;
Figure 1 illustrates a machine tool measurement probe and probe interface,
Figures 2a and 2b show a (prior art) frequency hopping pattern,
Figure 3 shows the first (metrology mode) and second (standby mode) hopping patterns of the present invention,
Figure 4 illustrates establishing communications in standby mode,
Figure 5 show the immediate successful transition from standby mode communications to metrology mode communications, and
Figure 6 illustrates how resilience can be built into the transition from standby to metrology mode communications.

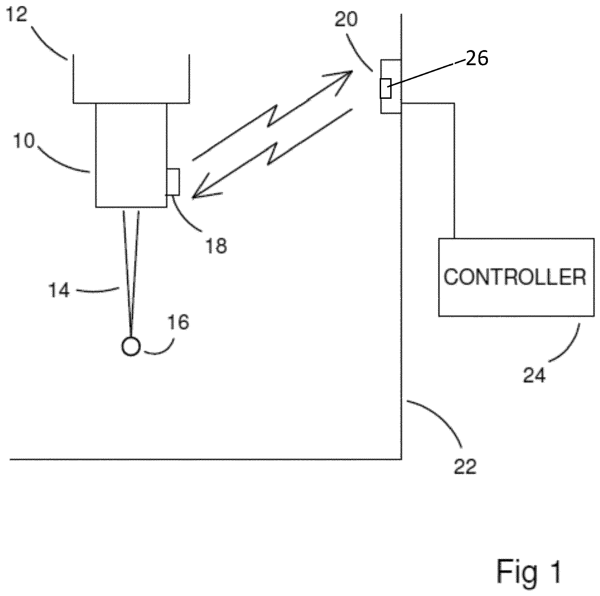

Figure 1 illustrates a touch trigger measurement probe 10 mounted to the spindle 12 of a machine tool. The measurement probe 10 has a deflectable stylus 14 with a workpiece-contacting tip 16. The measurement probe also includes a first frequency hopping radio communications module 18 that would typically be integrated within the body of the measurement probe but is shown separately in figure 1 for clarity. A measurement probe interface 20 is mounted on a stationary part 22 of the machine tool structure and is connected (typically via a cable) to the machine tool controller 24. The measurement probe interface 20 also includes a second frequency hopping radio communications module 26.

Data is transmitted between the measurement probe 10 and the probe interface 20 via a frequency hopping radio communications link that is established between the first frequency hopping radio communications module 18 and the second frequency hopping radio communications module 26. As noted above, the first and second frequency hopping radio communications modules needs to hop between frequency channels in synchronisation in order to allow a communications link to be established. The sequence in which the various different frequency channels are used is typically termed the "hopping pattern". The hopping pattern thus describes the order in which the different frequency channels will be used and thus ensures (after appropriate synchronisation) that both ends of the radio link are transmitting/receiving on the same frequency channel at the same point in time. In other words, the hopping pattern describes the sequence of "hopping" between the different frequency channels. The hopping pattern also defines the set of frequency channels that are used for communication.

As will be explained below in more detail, the present invention is directed to using a metrology mode and a standby mode that employ different hopping patterns. Additional details of the system, such as how communication timings are established to ensure synchronised frequency hopping and how the reliability of communications of measurement data from the measurement probe to the probe interface can be increased by allowing the retransmission of data, are therefore not explained in any detail in the present application. For further details of such features, reference is made to WO2004/057552, the contents of which are hereby incorporated herein by reference.

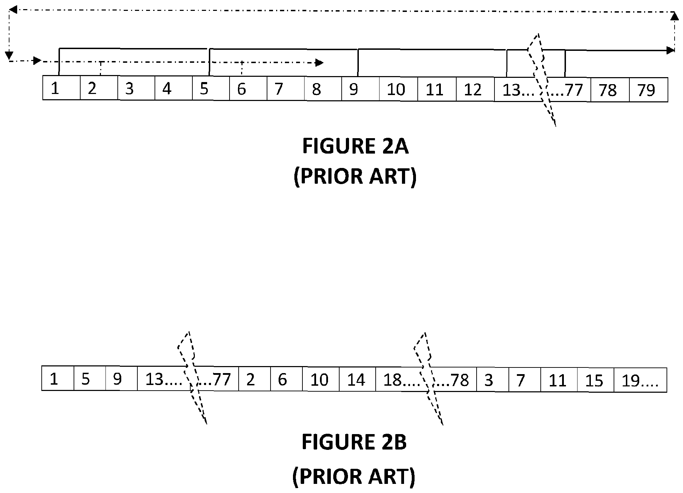

Referring to figures 2A and 2B, it is illustrated how a single hopping pattern for radio probe and probe interface systems of the type described in WO2004/057552 above are established.

The frequency hopping radio system operates using 79 discrete frequency channels within the 2.4GHz frequency band. The frequency channels are, for convenience, numbered sequentially as channels 1 to 79 with frequency channel 1 being at the lowest frequency and frequency channel 79 being at the highest frequency. As shown in figure 2A, the frequency channels all have the same width of approximately 1MHz. It should be noted that figure 2A shows only some of the channels in order to simplify the illustration.

An increment value is generated from a set of data bits of the probe identification code (the "probe ID code") of the measurement probe. This probe ID code is thus a unique identifier of the measurement probe. The hopping pattern is then calculating by adding the increment value (e.g. the integer "I") to the present channel to establish the next channel in the sequence. For example, I may take a value of 4. As can be seen in figure 2A, the first frequency channel of the hopping pattern will be channel 1, the next will be channel 5, the next will be channel 9 etc. The sequence also wraps back on itself so that, in the present example illustrated in figure 2A, channel 2 follows after channel 77. After the increment value (in this case 4) has been applied 78 times all the frequency channels will have been used. Furthermore, none of the channels will be included more than once in the hopping pattern because 79 is a prime number. It can thus be seen that all 79 channels will be included only once in the hopping pattern irrespective of the value of I. As an alternative to the technique described in WO2004/057552, versions of the above described RMI/RMP products use an algorithm and shared unique data (such as a probe identity code) to generate a randomised (shuffled) hopping pattern.

Figure 2B illustrates the start of the hopping pattern that is derived using the method described with reference to figure 2A. As mentioned above, the complete hopping pattern will include all 79 channels in an order dictated by the increment value (I). This hopping pattern is then used in all communications between the measurement probe and interface. If timing synchronisation is lost, then it must be re-established before communications are possible. Communication over the 79 individual channels is performed with a frame time (i.e. a time transmitting or receiving on a channel) of 1ms. To establish or re-establish communication, the interface will dwell on each channel in the hopping sequence for 79ms, while the probe hops through the entire hopping sequence changing channel and transmitting every 1ms. This should ensure that there is an opportunity for communication at least once every 79ms (providing the particular channel is not already occupied). In reality, it has been found that it can take anywhere up to 0.25s to establish communication and during this period the probe is transmitting in every frame. This is inefficient in terms of time and undesirable from battery power consumption. It also adds to the congestion in the RF environment.

To speed up the establishment of a frequency hopping communications link, it would be possible to initiate the communication process using a fixed channel system. A fixed channel system has, however, got many potential drawbacks. These include the required planning and co-ordination of co-located systems and the lack of tolerance to interference and multi-path effects. However, it does have the advantage of fast communication synchronisation because both the probe and interface will be on the same channel. The Bluetooth Low Energy (BLE) uses such a fixed channel approach to initiate communications. In particular, it reserves three channels as so-called "advertising channels". These three channels are predefined by the BLE protocol and are spaced apart from one another on the radio spectrum to avoid WIFI interferers. Fixed channel communications are repeated on each channel in sequence and information provided over each fixed channel that allows the full Bluetooth (i.e. a FHSS) communications link to be established.

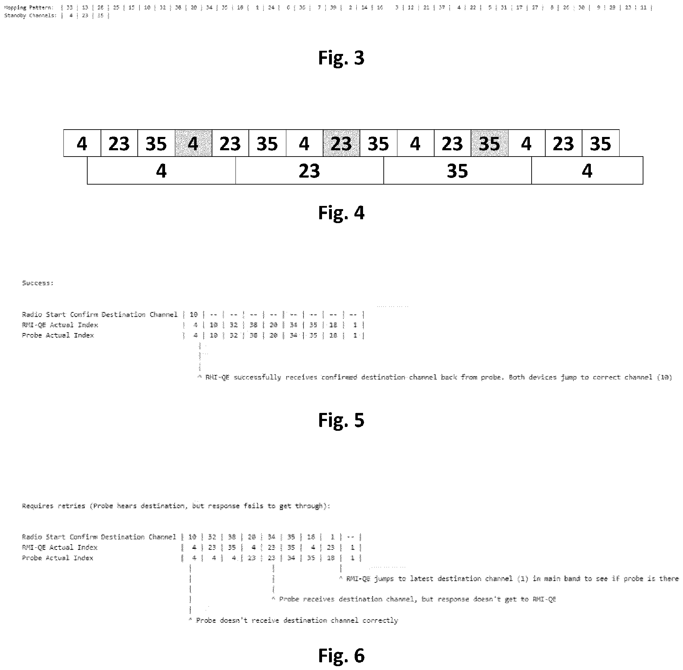

Referring next to figures 3 to 6, the communications protocol of the present invention will be described.

The communication link of the present invention is operable in a metrology mode and a standby mode. These different modes use different hopping patterns, with the hopping pattern of the standby mode including only a few (e.g. three) frequency channels. The hopping pattern of the metrology mode may include all the available frequency channels; these frequency channels may be ordered in a similar manner to the prior art systems (e.g. based on the probe ID code) or they may be pre-derived using a suitable (e.g. shuffling) algorithm. The three sub-channels of the standby mode may also be extracted from the unique data (e.g. the probe ID code) that is exchanged between the probe and interface when the two are partnered together or they may be pre-defined. In one embodiment, the hopping pattern(s) may be passed from the interface to the probe (or vice-versa) during an initial partnering process. The process or algorithm used to derive the three sub-channels preferably ensures that each of the three channels used in the standby mode are from a different third of the available band. This ensures that the if an interferer is present over one of the three channels, the other two channels should be sufficiently far spaced that communication can still take place on these instead. It also addresses the multi-path problem, by forcing the wavelength of the three channels to be sufficiently different.

Referring first to figure 3, a first hopping pattern is shown on the top line of the drawing that includes 39-channels in an order that is selected in the manner describe above with reference to figures 2a and 2b. Also shown is a second hopping pattern that includes only three channels (labelled "standby channels").

Referring next to figure 4, establishing a communications link when in standby mode will be described. In particular, during standby, both the measurement probe and the probe interface only operate over (i.e. jump between) the three sub-channels (i.e. channels 4,23 and 35 in this example) with a frame time period of 0.25ms. If the probe is required for a metrology operation (i.e. operation in metrology mode is required to communicate measurement data), the probe interface transmits a 'start' request beacon on each of the 3 channels in turn. This sequence of frequency channels adopted by the interface is shown on the top row in figure 4. The probe during this period is dwelling on each of the same three individual channels for four frame periods (i.e. 1ms), before hopping to the next. This sequence of frequency channels adopted by the probe is shown on the bottom row in figure 4.

It can thus be seen that communications are established within 3ms, assuming at least one of the communications on a frequency channel is received. This represents a significantly shorter "turn-on" time which benefits overall current consumption (in the probe) and therefore enables class-leading battery life. Once communications have been established, both the probe and interface switch to a 0.5ms time frame and revert to frequency hopping communications across the entire band, with the probe acting as communication master. In other words, once communications are established in standby mode, data is passed between the interface and probe that allows communications in the metrology mode (i.e. where there is hopping between all frequency channels in accordance with the first hopping pattern).

This arrangement has the advantage that standby probes do not pollute the RF environment by making unnecessary enquiry scans to determine whether to start operating. Furthermore, probe turn-on time is reduced considerably, enabling faster machine cycle time. The 3 sub-channels are preferably different from one machine to the next, which helps prevent communication collisions when trying to turn on multiple probes on from different machines at the same time. In addition, battery life is significantly improved as the probe is only receptive for very short periods of time.

Referring to figure 5, the successful receipt of a communication during standby mode and the transition to metrology mode is illustrated. In particular, it can be seen that the interface and probe communicate over frequency channel 4 during a first time slot. The communication is two-way and involves the probe receiving a message and sending a confirmation that it is received safely by the interface. The message received by the probe from the interface tells it to move to the main operating band on a specific channel (channel 10 in this example), whereupon the probe will also transition from being the transmission slave to being the transmission master. The probe and interface then hop in synchronisation between channels using the first frequency hopping pattern. In other words, communications in metrology mode are established using the information exchanged in standby mode.

Referring next to figure 6, is should be remembered that it is not possible to guarantee that the response to a transmitted message will be received by the interface and it is also not possible to be certain whether the original message to the probe was lost or just the response. An example of how communications resilience is ensured is thus provided.

Figure 6 shows the frequency channels used by the interface and the corresponding frequency channels of the probe. If the first transmission by the interface on channel 4 is not received by the probe, the interface continues cycling through the frequency channels of the second hopping pattern. It can be seen that when the probe and interface are both on channel 23 a transmission is received by the probe, but the probe's response is not received by the interface. The probe thus jumps to the instructed start channel (channel 34) and begins hopping through the first hopping pattern (i.e. the probe enters metrology mode) but the interface is still cycling through the second hopping pattern.

The instructed start channel (shown in the top line of figure 6) changes in accordance with the first hopping pattern. In particular, each subsequent turn on message will increment the channel that the probe is being requested to start operating on as if hopping through the main band in metrology mode. If the interface fails to establish communication with the measurement probe after cycling through the second hopping pattern a certain number of times, it then assumes that the probe must have entered the metrology mode. The interface, however, knows the channel that the probe would be operating on if it had entered metrology mode during any of the preceding slots because it would then be following the first hopping pattern. The interface will thus jump to the latest destination channel (channel 1 in this example) to see if the probe is active on that frequency channel. In particular, after all attempts to transmit a turn on message have been sent by the interface it will also transition to metrology mode as transmission slave on the next channel in the operating hopping sequence (i.e. because the channel was updated for each turn-on transmission if the probe received any of them then the probe and interface will remain synchronised on the main band).

Although the above examples relate to measurement probes and probe interfaces, the same frequency hopping radio communications module could be used in other measurement devices. Similarly, the use of 79 or 39 frequency channels, the use of three frequency channels in standby mode and operation in the 2.4GHz radio band are provided merely as examples and are not intended to restrict the scope of the present invention. It should also be noted that the frequency hopping radio communications modules of the measurement probe and probe interface should share the same hopping patterns but there is no need for such modules to be completely identical in all aspects. For example, one or all modules may comprise other features described in WO2004/057552.

## Claims

1. A frequency hopping radio communications module for a measurement system, the communications module being configured to transmit and/or receive radio signals using a plurality of frequency channels and to operate in at least a metrology mode for communicating measurement data and a standby mode, wherein operation in the standby mode comprises hopping between fewer frequency channels than operation in the metrology mode.

2. A communications module according to claim 1, wherein operation in the metrology mode comprises hopping between frequency channels in accordance with a first hopping pattern, the first hopping pattern including each of the plurality of frequency channels.

3. A communications module according to any preceding claim, wherein operation in the standby mode comprises hopping between frequency channels in accordance with a second hopping pattern, the second hopping pattern including a subset of the plurality of frequency channels.

4. A communications module according to claim 3, wherein the frequency channels of the second hopping pattern are spaced apart over the frequency band of operation.

5. A communications module according to any preceding claim, wherein operation in the standby mode comprises hopping between no more than five frequency channels and operation in the metrology mode comprises hopping between at least twenty frequency channels.

6. A communications module according to any preceding claim, wherein information communicated in the standby mode enables a communications link to be established in the metrology mode.

7. A measurement device, comprising a measurement sensor for generating metrology data and a frequency hopping radio communications module according to any proceeding claim, wherein the metrology data generated by the measurement sensor is transmitted to an associated interface using the frequency hopping radio communications module operating in the metrology mode.

8. A measurement device according to claim 7, wherein the hopping patterns used in the metrology mode and/or in the standby mode are received from an associated interface during an initial partnering process.

9. A measurement device according to any one or claim 7 to 8, wherein the communications module act as a transmission slave in standby mode and receives signals using the second hopping pattern, the communications module switching from the standby mode to the metrology mode on receipt of an appropriate activation message from the associated measurement interface, the activation message including information to allow frequency hopping synchronisation to be established with the associated interface on entering metrology mode.

10. A measurement device according to claim 9, wherein the communications module acts as the transmission master when operating in the metrology mode.

11. A measurement device according to any one or claim 7 to 10, wherein the measurement sensor comprises a touch trigger sensor that generates a trigger signal on attaining a certain spatial relationship with a point on the surface of an object, the trigger signal being communicated to the associated interface when the communications modules is operating in metrology mode.

12. A measurement interface comprising a communications module according to any one of claims 1 to 6 for communicating with a plurality of associated measurement devices and an output for passing the measurement data received from an associated measurement device to an associated machine.

13. A measurement interface according to claim 12, comprising a memory that stores the second hopping pattern, the interface transmitting the second hopping pattern to each associated measurement device during an initial partnering process.

14. A measurement interface according to any one of claims 12 to 13, that, when operating in standby mode, transmits a turn-on instruction using the second hopping pattern.

15. A measurement system comprising one or more measurement devices according to any one of claims 7 to 11 and a measurement interface according to any one of claim 12 to 14.
